# EUROPÄISCHE PATENTSCHRIFT

(11) **EP 3 942 175 B1**
(45) Veröffentlichungstag und Bekanntmachung des Hinweises auf die Patenterteilung: **07.06.2023**
(21) Anmeldenummer: 20712535.2
(22) Anmeldetag: 18.03.2020
(51) Int. Cl.: F03D 1/06, B66C 1/10, F03D 13/10, B66C 1/12, B66C 13/08

(54) **VERFAHREN ZUR MONTAGE VON ROTORBLÄTTERN EINER WINDENERGIEANLAGE**
METHOD FOR INSTALLING ROTOR BLADES OF A WIND TURBINE
PROCÉDÉ POUR LE MONTAGE DE PALES DE ROTOR D'UNE ÉOLIENNE

(30) Priorität: 19.03.2019 DE 102019106969
(43) Veröffentlichungstag der Anmeldung: 26.01.2022
(73) Patentinhaber: Wobben Properties GmbH, 26607 Aurich (DE)
(72) Erfinder: RUBNER, Florian, 26607 Aurich (DE); SCHUMANN, Klaas, 26524 Hage (DE); FETTBACK, Felix, 21435 Stelle (DE); MEYER-STÖVER, Wolfgang, 26639 Wiesmoor (DE); KNOOP, Frank, 26607 Aurich (DE); BÜNTING, Klaus, 26605 Aurich (DE); ZIMMERMANN, Frank, 26723 Emden (DE); HÜLLER, Martin, 26629 Grossefehn (DE); REHBERGER, Thomas, 26605 Aurich (DE)
(74) Vertreter: Eisenführ Speiser
(86) Internationale Anmeldenummer: PCT/EP2020/057376
(87) Internationale Veröffentlichungsnummer: WO 2020/187959

(56) Entgegenhaltungen:
- EP-A1- 3 001 030
- WO-A1-2019/001665
- DE-U1-202014 105 459
- KR-A- 20140 001 637
- KR-B1- 101 400 205
- KR-B1- 101 400 205

## Beschreibung

Die vorliegende Erfindung betrifft ein Verfahren zur Montage von Rotorblättern einer Windenergieanlage.

Bei der Errichtung einer Windenergieanlage wird typischerweise zunächst der Turm errichtet und anschließend kann dann eine Gondel auf dem Turm befestigt werden und die Rotorblätter können an einer Rotornabe der Gondel befestigt werden. Alternativ dazu kann die Rotornabe zusammen mit den daran befestigten Rotorblättern nach oben gezogen und an der Gondel befestigt werden.

EP 1 597 477 B1 beschreibt ein Verfahren zur Montage von Rotorblättern an einer Rotornabe einer Windenergieanlage. Hierzu wird die Rotornabe in eine vorgegebene erste Position (3 Uhr- oder 9 Uhr-Position) gedreht und ein erstes Rotorblatt wird an der Rotornabe befestigt. Die Rotornabe wird dann mit Hilfe des ersten Rotorblattes (unter Zuhilfenahme der Schwerkraft) in eine vorgegebene zweite Position gedreht, so dass das zweite Rotorblatt im Wesentlichen nach oben (α = 0°) gezogen und an der Rotornabe in einer 3-Uhr- oder 9-Uhr-Position befestigt werden kann. Bevor das zweite Rotorblatt an der Nabe befestigt wird, wird die Gondel um 180° gedreht. Die Rotornabe kann mit Hilfe des zweiten Rotorblattes in eine weitere vorgegebene Position gedreht werden. Die Gondel kann wiederum um 180° gedreht werden und das dritte Rotorblatt kann befestigt werden.

WO 2003/012291 A1 beschreibt ein Verfahren zur Montage von Rotorblättern einer Windenergieanlage. Während der Montage der Rotorblätter kann ein Gewicht lösbar an einem Flansch der Rotornabe montiert werden. Die Rotornabe wird in eine vorgegebene Position gedreht und die Rotorblätter der Windenergieanlage können an der Nabe befestigt werden, indem die lösbaren Gewichte entfernt und die Rotorblätter an der Nabe montiert werden. Durch immer größer werdende Länge der Rotorblätter wird eine Montage wie oben beschrieben immer schwieriger.

WO 2019/001665 A1 zeigt ein Verfahren zur Montage von Rotorblättern an einer Nabe einer Windenergieanlage. Nach einer Montage des ersten Rotorblattes wird die Nabe weitergedreht und das zweite Rotorblatt wird montiert. Anschließend wird die Nabe weitergedreht und das letzte Rotorblatt wird montiert.

In der prioritätsbegründenden deutschen Patentanmeldung hat das Deutsche Patent- und Markenamt die folgenden Dokumente recherchiert: DE 20 2014 105 459 U1, US 2015/0 368 075 A1, EP 1 597 477 B1 und WO 2003/012 291 A1.

Daher ist es eine Aufgabe der vorliegenden Erfindung, ein Verfahren zur Montage von Rotorblättern einer Windenergieanlage vorzusehen, welches eine Montage auch von sehr langen Rotorblättern erlaubt. Es ist eine Aufgabe der vorliegenden Erfindung, die oben beschriebenen Nachteile im Stand der Technik zumindest teilweise zu beheben.

Diese Aufgabe wird durch ein Verfahren zur Montage von Rotorblättern einer Windenergieanlage nach Anspruch 1 gelöst.

Somit wird ein Verfahren zur Montage von Rotorblättern einer Windenergieanlage an einer Nabe der Windenergieanlage vorgesehen. Die Windenergieanlage soll drei Rotorblätter aufweisen und die Nabe weist drei Blattanschlüsse auf, welche jeweils um 120° zueinander versetzt sind. Ein erster Blattanschluss der Nabe wird in eine 15-Uhr-Position (d. h. in einem Winkel von 90° bezogen auf eine Turmlängsachse) oder in eine 21-Uhr-Position (d. h. 270°) gedreht. Ein erstes Rotorblatt kann dann im Wesentlichen horizontal nach oben gezogen werden und an dem ersten Blattanschluss befestigt werden. Ein zweiter Blattanschluss der Nabe wird in eine 15-Uhr-Position (90°) oder in eine 21-Uhr-Position, d. h. in einem Winkel von 270°, gedreht. Dies erfolgt z. B. mittels der Schwerkraft des ersten Rotorblattes an dem ersten Blattanschluss. Das erste Rotorblatt wird hierbei auf 19-Uhr oder 17-Uhr abgelassen (Rotorwinkel 210° oder 150°). Das zweite Rotorblatt kann dann wieder im Wesentlichen waagerecht nach oben gezogen und an dem zweiten Rotorblattanschluss bzw. dem zweiten Anschluss der Rotornabe befestigt werden. Die Rotornabe wird dann so gedreht, dass der dritte Rotornabenanschluss bzw. Rotorblattanschluss sich in der 14-Uhr-Position (d. h. 60°) oder einer 22-Uhr-Position (d. h. 300°) befindet. Das dritte Rotorblatt wird dann mittels eines Krans in einem Zugwinkel von beispielsweise 30° nach oben gezogen und an dem zweiten Rotorblattanschluss befestigt.

Während im Stand der Technik die Rotorblätter waagerecht nach oben gezogen werden und die Rotornaben so gedreht werden, dass sich ein freier Rotorblattanschluss in einer 15- oder 21-Uhr-Position befindet, um das im Wesentlichen waagerecht ausgerichtete Rotorblatt daran zu befestigen, wird erfindungsgemäß das dritte Rotorblatt in einem Zugwinkel von beispielsweise 30° bezogen auf eine Horizontale nach oben gezogen und an einem Blattanschluss befestigt, welcher sich in der 14-Uhr-Position oder in der 22-Uhr-Position befindet.

Um dies zu erreichen, muss das Rotorblatt in einem Zugwinkel von > 0° gezogen werden, d. h. das Rotorblatt wird zur Montage nach oben gezogen, ohne dass es sich dabei im Wesentlichen in der Horizontalen befindet.

Durch das Hochziehen des Rotorblattes in einem Zugwinkel von > 0° und durch Drehen des dritten Rotorblattanschlusses auf eine 14-Uhr-Position oder eine 22-Uhr-Position kann der Kran entlastet werden, da die Rotornabe nicht bis auf eine 15-Uhr-Position gedreht werden kann. Dies könnte zu einer Überschreitung der tolerierbaren Kräfte führen.

Durch das erfindungsgemäße Verfahren und durch einen Verzicht auf einen Ballastarm mit der Montage und Demontage des Ballastarmes kann die Aufbauzeit und damit die Kosten für die Windenergieanlage erheblich reduziert werden. Ferner entfällt ein Transport und eine Montage der Ballastarme zur Baustelle.

Das erfindungsgemäße Verfahren ist insbesondere vorteilhaft bei Windenergieanlage, welche eine Nabenhöhe von > 100 m und/oder eine Rotorblattlänge von > 50 m aufweisen.

Weitere Ausgestaltungen der Erfindung sind Gegenstand der Unteransprüche.

Vorteile und Ausführungsbeispiele der Erfindung werden nachstehen unter Bezugnahme auf die Zeichnung näher erläutert.
- Fig. 1: zeigt eine schematische Darstellung einer Windenergieanlage gemäß der Erfindung,
- Fig. 2: zeigt eine schematische Darstellung eines Rotors der Windenergieanlage in einem zugehörigen Winkelsystem,
- Fig. 3: zeigt eine schematische Draufsicht auf eine Windenergieanlage,
- Fig. 4: zeigt eine schematische Darstellung eines Rotorblattes bei der Montage,
- Fig. 5: zeigt eine perspektivische Ansicht eines Rotorblattes gemäß einem Ausführungsbeispiel der Erfindung, und
- Fig. 6: zeigen jeweils einen Schritt bei der Montage der Rotorblätter der
- bis 23: Windenergieanlage.

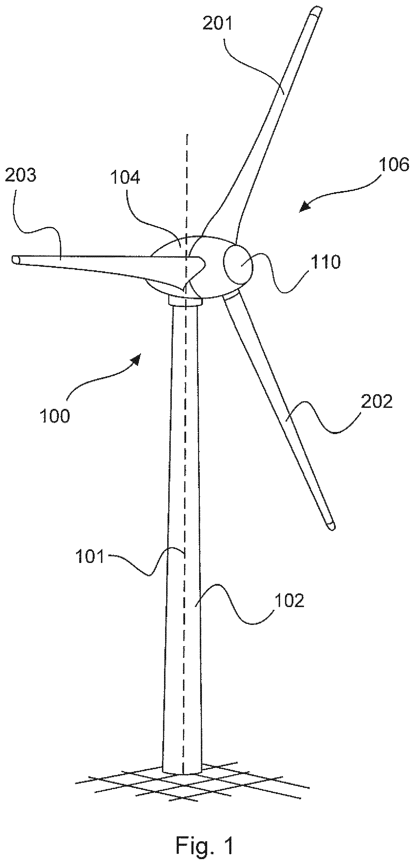

Fig. 1 zeigt eine schematische Darstellung einer Windenergieanlage gemäß der Erfindung. Die Windenergieanlage 100 weist einen Turm 102 und eine Gondel 104 auf dem Turm 102 auf. Der Turm 102 weist eine Turmlängsachse 101 auf. An der Gondel 104 ist ein aerodynamischer Rotor 106 mit drei Rotorblättern 201 - 203 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 201 - 203 können durch Pitchmotoren an den Rotorblattwurzeln 108b der jeweiligen Rotorblätter 201 - 203 verändert werden.

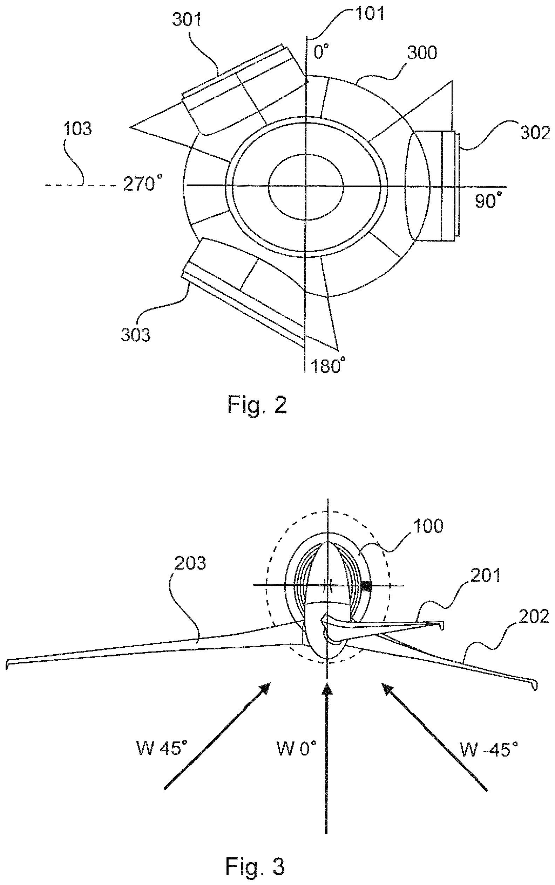

Fig. 2 zeigt eine schematische Darstellung eines Rotors der Windenergieanlage in einem zugehörigen Winkelsystem. Die Rotornabe 300 weist drei Rotorblattanschlüsse 301 - 303 auf. Die drei Rotorblattanschlüsse 301 - 303 sind jeweils um 120° zueinander versetzt angeordnet. In Fig. 2 ist ebenfalls ein Winkelsystem dargestellt, wobei die Turmlängsachse 101 sich bei 0° befindet (d. h. in der 12-Uhr- oder 24-Uhr-Position). 90° bezogen auf die Turmlängsachse 101 stellt eine 3-Uhr- oder 15-Uhr-Position, 180° bezogen auf die Turmlängsachse 101 stellt eine 6-Uhr- oder 18-Uhr-Position und 270° bezogen auf die Turmlängsachse 101 stellt eine 9-Uhr- oder 21-Uhr-Position dar. Das Winkelsystem ist somit in der Seitenansicht auf den Rotor ausgerichtet.

In Fig. 2 ist ebenfalls eine Horizontale 103 gezeigt. Dies entspricht dem Winkel 90° bzw. 270°.

Fig. 3 zeigt eine schematische Draufsicht auf eine Windenergieanlage. In Fig. 3 ist eine erfindungsgemäße Windenergieanlage sowie verschiedene Windrichtungen dargestellt. Die Windenergieanlage 100 weist mindestens drei Rotorblätter 201 - 203 auf. In Fig. 3 ist eine Windrichtung W45, d. h. mit + 55°, eine Windrichtung 0, d. h. mit 0° und eine Windrichtung - 55° W-45 dargestellt.

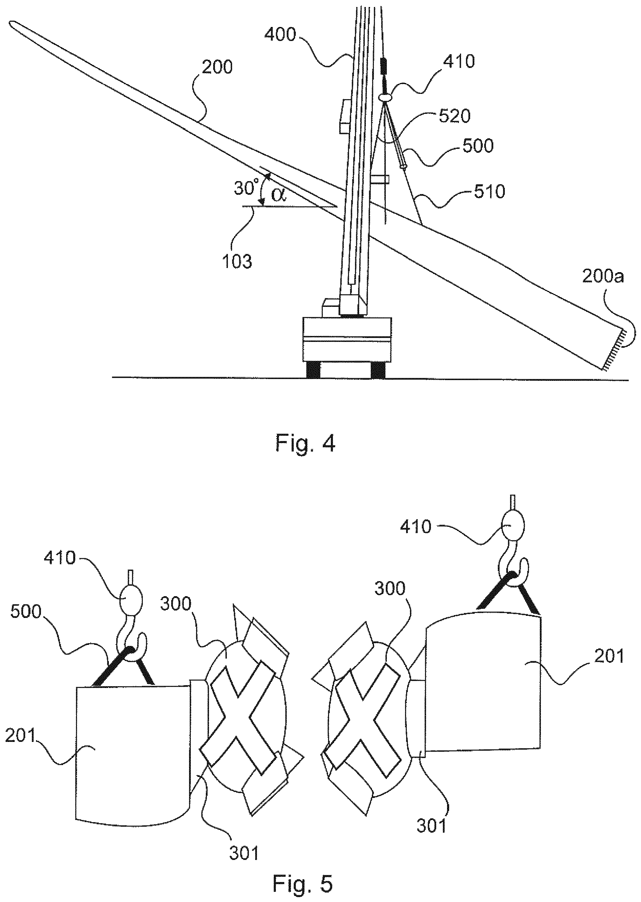

Fig. 4 zeigt eine schematische Darstellung eines Rotorblattes bei der Montage. In Fig. 4 ist eine Momentaufnahme bei der Montage eines Rotorblattes gezeigt. Gemäß einem Aspekt der vorliegenden Erfindung wird das Rotorblatt nicht wie sonst üblich im Wesentlichen waagerecht, sondern in einem Zugwinkel α bezogen auf eine Horizontale 103 nach oben gezogen. Dieser Winkel α kann beispielsweise 30° bezogen auf die Turmlängsachse darstellen. Das Rotorblatt 200 kann mittels eines Kranhakens 410 sowie eines Slings bzw. einer Schlaufe 500 nach oben gezogen werden. Der Sling 500 kann dabei zwei Arme 510, 520 aufweisen, welche eine unterschiedliche Länge aufweisen können, so dass das Rotorblatt in dem gewünschten Zugwinkel nach oben transportiert werden kann.

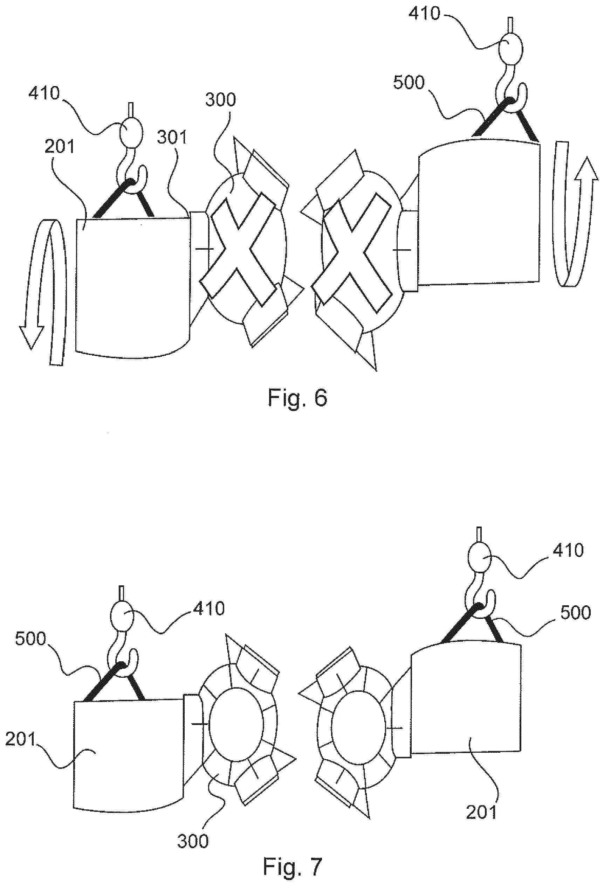

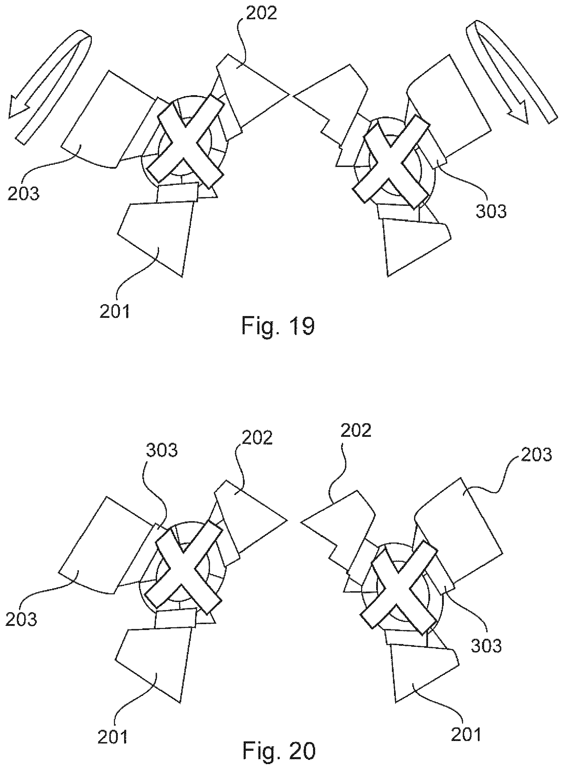

Fig. 5 bis Fig. 23 zeigen jeweils eine schematische Darstellung bei den jeweiligen Montageschritten der Rotorblätter der Windenergieanlage. In Fig. 5 ist ein erster Schritt S1 bei der Montage der Rotorblätter gezeigt. Das erste Rotorblatt 201 kann mittels eines Kranhakens 410 an einem Sling 500 im Wesentlichen horizontal nach oben gezogen und an einem ersten Blattanschluss 301 der Nabe 300 befestigt werden. Dazu wird die Nabe 300 derart gedreht, dass sich der erste Rotorblattanschluss 301 entweder in der 21-Uhr-Position bzw. bei 270° oder in der 3-Uhr-Position, d. h. bei 90° in dem Winkelsystem von Fig. 2 befindet. In Fig. 6 links ist die Montage bei 270° und rechts bei 90° gezeigt. Das erste Rotorblatt 201 wird dann an dem ersten Rotorblattanschluss 301 befestigt. Hierbei trägt der Kranhaken 410 zumindest einen Teil der Lasten des ersten Rotorblattes 201.

Optional kann das erste Rotorblatt 201 wie in Fig. 6 gezeigt gedreht werden, damit alle Verschraubungen des Rotorblattes festgezogen werden können. Fig. 6 kann somit den zweiten Schritt S2 darstellen.

Fig. 7 stellt dann den vierten Schritt S4 dar. Hier ist der Rotor nicht arretiert und der Kran trägt zumindest einen Teil der Lasten des ersten Rotorblattes.

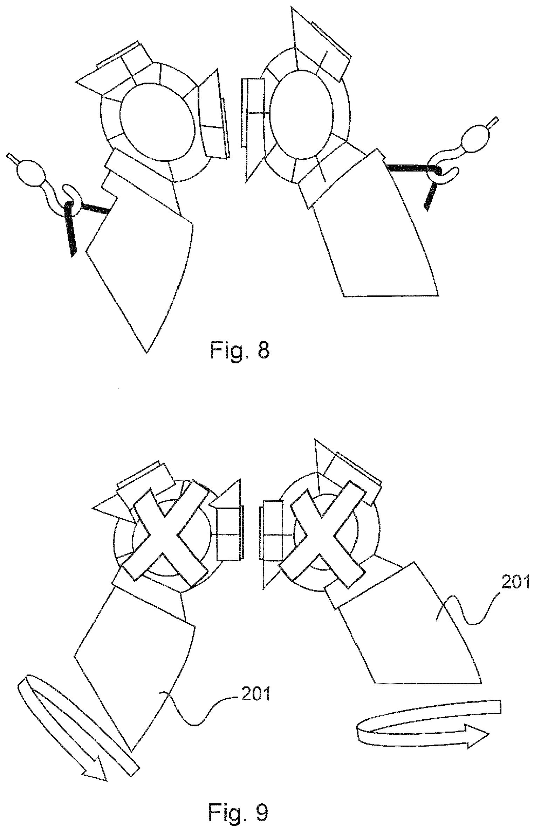

Fig. 8 stellt dann den fünften Schritt S5 dar, wobei der Rotor teilweise gedreht wird, so dass sich das erste Rotorblatt in einem Winkel von 150° oder 210° befindet bzw. das erste Rotorblatt 201 befindet sich in der 19-Uhr- oder 17-Uhr-Position in dem Winkelsystem von Fig. 2.

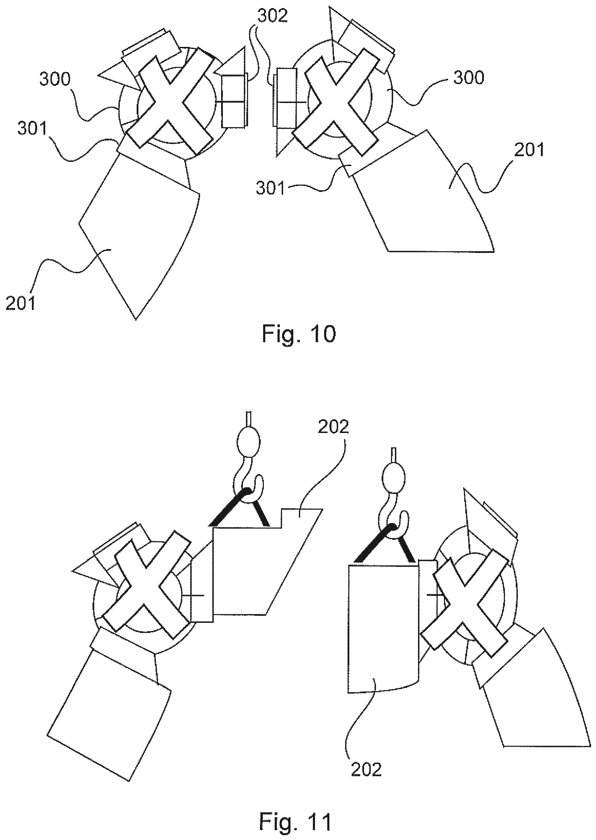

In Fig. 9 ist dann der sechste Schritt S6 gezeigt, bei welchem der Kranhaken und der Sling entfernt worden sind. Optional können in den Schritten S6 und S7, d. h. gemäß der Figur 9, das erste Rotorblatt 201 weitergedreht werden, damit alle Schraubverbindungen festgezogen werden können. In Fig. 10 befindet sich das erste Rotorblatt in der definierten Endposition. Das erste Rotorblatt 201 befindet sich dann entweder bei 210° oder bei 150° bzw. in der 7-Uhr- oder 5-Uhr-Position. Der zweite Rotorblattanschluss 302 befindet sich dann entweder bei 90° oder bei 270°, d. h. entweder in der 15-Uhr-Position oder in der 21-Uhr-Position.

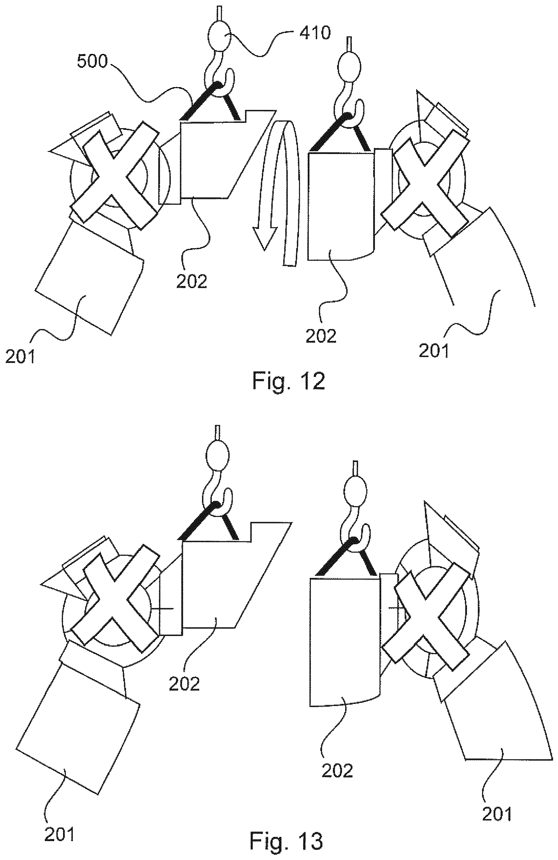

Damit kann das zweite Rotorblatt wie in Fig. 11 gezeigt entsprechend montiert werden. In der Fig. 12 wird die Montage des zweiten Rotorblattes 202 beschrieben. Wie bei dem ersten Rotorblatt wird das zweite Rotorblatt 202 mittels eines Slings 500 an einem Kranhaken befestigt und im Wesentlichen waagerecht nach oben gezogen. Das zweite Rotorblatt wird dann an dem zweiten Rotorblattanschluss 302 befestigt. Ggf. muss das Rotorblatt gedreht werden, damit alle Schraubverbindungen festgezogen werden können. Optional muss das Rotorblatt dann wieder zurückgedreht werden, damit die Slings und der Haken wieder entfernt werden können.

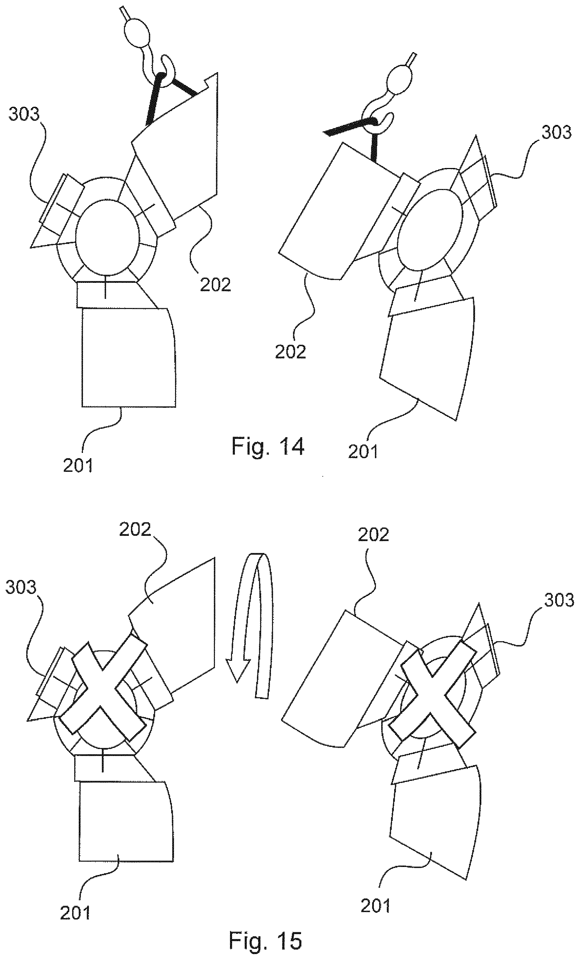

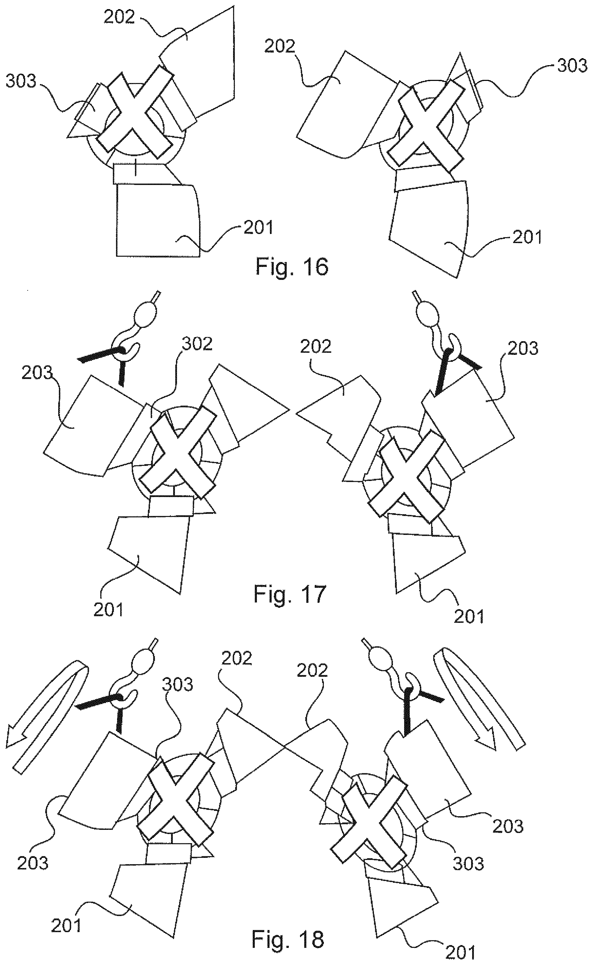

Wie in den Fig. 14 und 15 zu sehen, wird dann die Nabe 300 so gedreht, dass sich das erste Rotorblatt bei 180° befindet, d. h. in der 6-Uhr-Position, und das zweite Rotorblatt befindet sich dann in der 14-Uhr- oder 22-Uhr-Position, so dass der dritte Rotorblattanschluss 303 sich entweder in der 14-Uhr- oder 22-Uhr-Position befindet. Dafür wird das zweite Rotorblatt, welches bereits an der Nabe befestigt ist, mittels des Krans um 30° gezogen (vgl. Fig. 14). Optional kann der Blattwinkel des zweiten Rotorblattes verstellt werden, um alle Schraubverbindungen befestigen zu können. In Fig. 16 befindet sich das zweite Rotorblatt in der definierten Endposition, diese kann der definierten Fahnenstellung entsprechen.

In den Fig. 17 bis 23 wird die Montage des dritten Rotorblattes 203 gezeigt. Das dritte Rotorblatt 203 wird wie beispielsweise in Fig. 4 gezeigt mit einem Zugwinkel von 30° nach oben befördert und an dem dritten Rotorblattanschluss 303 befestigt.

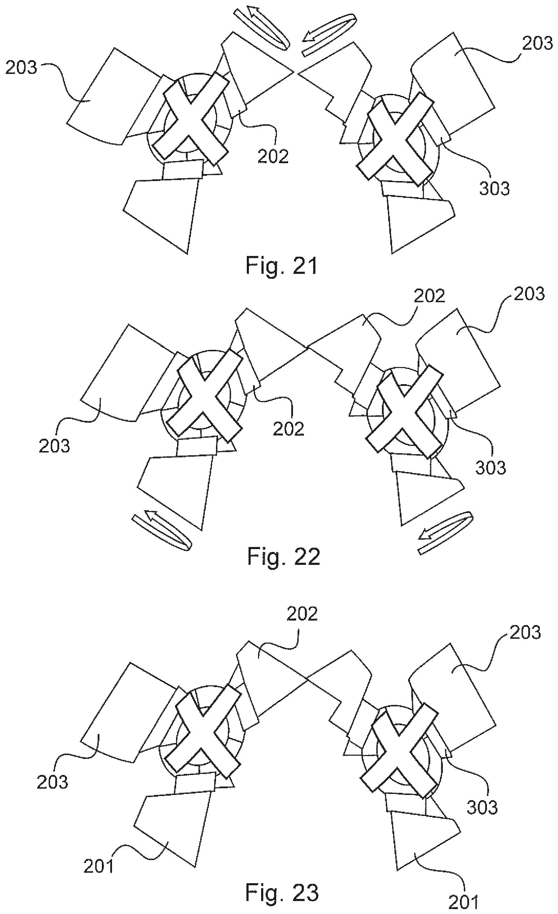

Um alle Schrauben befestigen zu können, kann es sein, dass der Blattwinkel des dritten Rotorblattes verstellt werden muss. Zum Abschluss der Montageschritte werden alle Rotorblätter in Fahnenstellung verdreht. Nach Fig. 23 wird die Rotorarretierung gelöst, die Windenergieanlage kann trudeln.

## Patentansprüche

1. Verfahren zur Montage von Rotorblättern (200) einer Windenergieanlage (100) an einer Rotornabe (300) der Windenergieanlage (100), wobei die Windenergieanlage (100) einen Turm (102) mit einer Turmlängsachse (101) aufweist, wobei die Rotornabe (300) einen ersten, zweiten und dritten Rotorblattanschluss (301 - 303) aufweist, mit den Schritten:
Drehen der Rotornabe (300), bis sich der erste Rotorblattanschluss (301) in einem Winkel von 90° oder 270° bezogen auf die Turmlängsachse (101) befindet,
Anheben des ersten Rotorblattes (201) im Wesentlichen waagerecht und Befestigen des ersten Rotorblattes (201) an dem ersten Rotorblattanschluss (301),
Drehen der Rotornabe (300), so dass sich der zweite Rotorblattanschluss (302) in einem Winkel von 90° oder 270° bezogen auf die Turmlängsachse (101) befindet,
Anheben des zweiten Rotorblattes (202) im Wesentlichen waagerecht und Befestigen des zweiten Rotorblattes (202) an dem zweiten Rotorblattanschluss (302),
Drehen der Rotornabe (300), bis sich der dritte Rotorblattanschluss (303) in einem Winkel von 60° oder 300° bezogen auf die Turmlängsachse (101) befindet,
Anheben des dritten Rotorblattes (203) in einem Winkel von α = 30° bezogen auf eine Horizontale (103), und
Befestigen des dritten Rotorblattes (203) an dem dritten Rotorblattanschluss (303).

2. Verfahren nach Anspruch 1, wobei
die Rotorblätter eine Länge von > 50 m aufweisen und die Rotornabe (300) eine Höhe von > 100 m aufweist.

## Claims

1. A method of installing rotor blades (200) of a wind turbine (100) on a rotor hub (300) of the wind turbine (100), wherein the wind turbine (100) has a tower (102) with a tower longitudinal axis (101), wherein the rotor hub (300) has a first, a second and a third rotor blade connection (301 - 303), comprising the steps:
rotating the rotor hub (300) until the first rotor blade connection (301) is at an angle of 90° or 270° with respect to the tower longitudinal axis (401),
lifting the first rotor blade (201) substantially horizontally and fixing the first rotor blade (201) to the first rotor blade connection (301),
rotating the rotor hub (300) so that the second rotor blade connection (302) is at an angle of 90° or 270° with respect to the tower longitudinal axis (101),
lifting the second rotor blade (202) substantially horizontally and fixing the second rotor blade (202) to the second rotor blade connection (302),
rotating the rotor hub (300) until the third rotor blade connection (303) is at an angle of 60° or 300° with respect to the tower longitudinal axis (101),
lifting the third rotor blade (203) at an angle of α = 30° with respect to a horizontal (103), and
fixing the third rotor blade (203) to the third rotor blade connection (303).

2. A method according to claim 1 wherein
the rotor blades are of a length of >50 m and the rotor hub (300) is at a height of >100 m.

## Revendications

1. Procédé de montage de pales de rotor (200) d'une éolienne (100) sur un moyeu de rotor (300) de l'éolienne (100), dans lequel l'éolienne (100) présente un mât (102) avec un axe longitudinal de mât (101), dans lequel le moyeu de rotor (300) présente un premier, un deuxième et un troisième raccord de pale de rotor (301 - 303), avec les étapes :
de rotation du moyeu de rotor (300) jusqu'à ce que le premier raccord de pale de rotor (301) se trouve à un angle de 90° ou de 270° par rapport à l'axe longitudinal de mât (101),
de levage de la première pale de rotor (201) de manière sensiblement horizontale et de fixation de la première pale de rotor (201) sur le premier raccord de pale de rotor (301),
de rotation du moyeu de rotor (300) de telle sorte que le deuxième raccord de pale de rotor (302) se trouve à un angle de 90° ou de 270° par rapport à l'axe longitudinal de mât (101),
de levage de la deuxième pale de rotor (202) de manière sensiblement horizontale et de fixation de la deuxième pale de rotor (202) sur le deuxième raccord de pale de rotor (302),
de rotation du moyeu de rotor (300) jusqu'à ce que le troisième raccord de pale de rotor (303) se trouve à un angle de 60° ou de 300° par rapport à l'axe longitudinal de mât (101),
de levage de la troisième pale de rotor (203) selon un angle α = 30° par rapport à une horizontale (103), et
de fixation de la troisième pale de rotor (203) sur le troisième raccord de pale de rotor (303).

2. Procédé selon la revendication 1, dans lequel
les pales de rotor présentent une longueur > 50 m et le moyeu de rotor (300) présente une hauteur > 100 m.
